(19) Europäisches Patentamt / European Patent Office / Office européen des brevets

(11) **EP 1 374 973 B1**

(12) **FASCICULE DE BREVET EUROPEEN**

(45) Date de publication et mention
de la délivrance du brevet:
**30.05.2007 Bulletin 2007/22**

(51) Int Cl.:
***B01D 53/04*** *(2006.01)*   ***B01D 53/047*** *(2006.01)*

(21) Numéro de dépôt: **03291431.9**

(22) Date de dépôt: **13.06.2003**

(54) **Procédé de régulation d'une unité de traitement, par adsorption à modulation de pression, d'un gaz de charge**

Verfahren zur Regelung einer Vorrichtung zur Behandlung einer Gascharge durch Druckwechseladsorption

Process for controlling a feed gas pressure swing adsorption treatment unit

(84) Etats contractants désignés:
**BE DE ES FR IT NL**

(30) Priorité: **21.06.2002 FR 0207717**

(43) Date de publication de la demande:
**02.01.2004 Bulletin 2004/01**

(73) Titulaire: **L'AIR LIQUIDE, Société Anonyme pour l'Etude
et l'Exploitation des Procédés Georges Claude
75321 Paris Cedex 07 (FR)**

(72) Inventeur: **Monereau, Christian
75011 Paris (FR)**

(74) Mandataire: **Le Moenner, Gabriel et al
L'AIR LIQUIDE S.A.,
Service Propriété Industrielle,
75, quai d'Orsay
75321 Paris Cédex 07 (FR)**

(56) Documents cités:
**US-A- 4 693 730**

**Description**

La présente invention concerne un procédé de régulation d'une unité de traitement, par adsorption à modulation de pression, d'au moins un gaz de charge, dans laquelle l'unité de traitement, couramment appelée PSA (« Pressure Swing Adsorption », c'est-à-dire adsorption à modulation de pression), comporte N unités d'adsorption, N étant supérieur ou égal à 1, fonctionnant suivant un cycle paramétré, typiquement réparti uniformément en au plus N temps de phase. De façon classique, on appelle « temps de phase » le quotient de la durée du cycle par le nombre d'adsorbeurs en service.

Les unités PSA sont utilisées pour la production d'hydrogène, de monoxyde de carbone, de dioxyde de carbone, pour le séchage de gaz, pour la séparation des constituants de l'air avec production d'azote et/ou d'oxygène, pour le déballastage en dioxyde de carbone, etc...

Les pressions indiquées par la suite sont toutes en bars absolus.

De manière générale, les adsorbeurs d'une unité PSA suivent en décalage dans le temps un cycle de fonctionnement, par la suite appelé par commodité « cycle PSA », qui est réparti uniformément en autant de temps de phase qu'il y a d'adsorbeurs en fonctionnement, et qui est formé d'étapes de base, à savoir typiquement les étapes :

- d'adsorption à sensiblement une haute pression du cycle ;
- de dépressurisation à co-courant, généralement depuis la haute pression du cycle ;
- de dépressurisation à contre-courant, généralement jusqu'à la basse pression du cycle ;
- d'élution à sensiblement une basse pression du cycle ; et
- de repressurisation, depuis la basse pression du cycle jusqu'à la haute pression du cycle.

Suivant les applications, les étapes de dépressurisation et repressurisation peuvent comporter plusieurs sous-étapes telles que des équilibrages de pression entre adsorbeurs ou entre adsorbeur et capacité, etc. La présence de telle ou telle de ces étapes dans le cycle PSA ne modifie en rien la portée de la présente invention.

Par la suite, on s'intéresse au fonctionnement d'une unité PSA en régime établi, c'est-à-dire en dehors de périodes transitoires de démarrage ou d'arrêt de l'unité qui correspondent généralement à des cycles spéciaux élaborés à cet effet.

La contrainte principale de fonctionnement d'une unité PSA en régime établi réside dans le niveau de pureté du gaz produit. Sous cette contrainte, le fonctionnement du PSA est alors généralement optimisé soit pour maximiser le rendement d'extraction (quantité de gaz produit/quantité de ce gaz présent dans le gaz de charge), soit pour minimiser l'énergie consommée, soit encore pour maximiser le volume de gaz produit.

On utilise à cet effet une unité de commande de l'unité PSA adaptée pour modifier les paramètres du cycle de fonctionnement de cette unité. On a proposé classiquement que cette unité de commande reçoive en permanence des signaux typiquement représentatifs du débit du flux de gaz de charge et/ou du débit du flux de gaz produit.

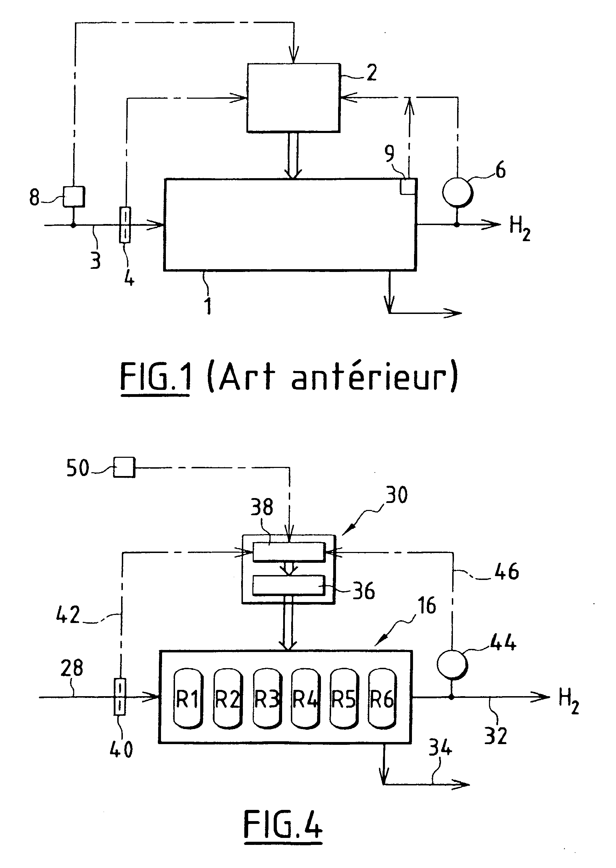

Sur la figure 1 des dessins annexés, qui illustre l'art antérieur, sont représentées une unité PSA 1 de production d'hydrogène et une unité de commande 2. La ligne 3 d'alimentation en gaz à traiter est pourvue d'un débitmètre 4 dont les mesures sont transmises en continu à l'unité de commande 2.

En fonction de la variation du débit d'alimentation, l'unité de commande modifie la durée du temps de phase du cycle de sorte que plus le débit augmente, plus le temps de phase diminue, et inversement. Cette régulation est couramment appelée « régulation de capacité ».

On connaît par ailleurs un deuxième type de régulation qui consiste à tenir compte de la pureté du gaz traité pour corriger certains paramètres du cycle de fonctionnement de l'unité PSA. L'unité PSA 1 de la figure 1 comporte à cet effet un appareil 6 de mesure de la teneur en hydrogène du gaz produit par l'unité PSA. Les mesures de cet appareil sont transmises de façon périodique ou continue à l'unité de commande pour réguler le fonctionnement de l'unité PSA. Pour par exemple une spécification en hydrogène produit de 99,9 %, c'est-à-dire pour une teneur minimale acceptable de 99,9 %, la mesure d'une teneur en hydrogène égale à 99,99 % conduit à faire augmenter le temps de phase par l'unité de commande, tandis qu'une telle mesure égale à 99,91 % conduit à faire diminuer ce temps de phase pour avoir une marge de sécurité. Ce type de régulation est couramment appelé « régulation sur le contrôle de pureté ». Dans certains cas, seule la régulation sur le contrôle de pureté est mise en oeuvre, mais la régulation de l'unité PSA est alors délicate.

A côté de ces régulations principales peuvent exister un certain nombre de régulations internes à l'unité PSA qui font que le cycle de pression se déroule dans des conditions les plus régulières possibles. A titre d'exemple, le débit de repressurisation peut être maintenu constant sur la durée de l'étape, par action sur une vanne de régulation.

Cependant, dans un certain nombre de cas, les régulations principales et internes se révèlent parfois insuffisantes pour empêcher une pollution de la production.

En particulier, pour les unités de traitement qui comportent plusieurs adsorbeurs dans des états différents à un même moment, il est presque impossible de changer instantanément et dans une proportion importante les paramètres du cycle PSA à la suite par exemple d'une augmentation brutale du débit de gaz de charge. Il faut bien entre autres achever la repressurisation d'un adsorbeur avant de le passer en phase d'adsorption.

Il en est de même lorsqu'une impureté voit sa teneur augmenter brusquement dans le gaz de charge, en particulier s'il s'agit d'une impureté difficile à arrêter telle que l'azote ou l'argon, et en particulier si cette impureté est en relativement faible quantité. A titre d'exemple, une teneur en azote passant de 50 à 500 ppm ne modifiera pas la durée de la phase d'adsorption, car son effet sur la mesure de débit sera négligeable, mais polluera progressivement l'adsorbant. La régulation sur le contrôle de pureté réagira mais avec retard et, suivant les paramètres choisis pour cette régulation, on observera soit une pollution momentanée de la production, soit un déréglage brutal du cycle conduisant à une perte importante en rendement sur un intervalle de temps plus ou moins long.

Un moyen utilisé pour pallier cet inconvénient est d'installer des moyens de mesure sur le gaz de charge afin de connaître en permanence ses caractéristiques de composition, pression, température, densité et débit et, à partir de là, d'ajuster le cycle, voire de changer de cycle si les modifications sont suffisamment importantes pour le justifier, en fonction des données mesurées.

Sur la figure 1 des dessins annexés est représenté un analyseur 8 permettant de connaître en permanence ou avec une fréquence suffisante, la composition du gaz de charge. Cette information transmise à l'unité de commande 2 permet, via la masse moléculaire du gaz de charge calculée d'après cette analyse, de connaître le débit exact de gaz de charge.

La connaissance de la composition et du débit permet alors au système de recalculer les paramètres optimaux du cycle.

Si le gaz de charge est constitué d'un mélange de plusieurs gaz, on peut installer des débitmètres et, si nécessaire, des analyseurs locaux et/ou des densimètres afin de reconstituer par addition, la composition et le débit du gaz de charge total.

L'inconvénient d'un tel système est qu'il est coûteux en matériel (analyseurs), en frais et exploitation (gaz étalon) et en maintenance (étalonnage, ...). De plus, une analyse erronée, due par exemple à une dérive excessive de l'appareillage, va conduire à un cycle non adapté au gaz de charge réel provoquant soit une perte de production, soit une pollution.

Le but de la présente invention est de proposer un procédé de régulation simplifié d'une unité PSA, d'un coût négligeable par rapport aux systèmes d'analyse cités ci-dessus, et qui permette dans un grand nombre de cas de limiter les risques de pollution et/ou de perte de production lors d'une variation brusque et/ou importante de la composition du gaz de charge alimentant cette unité.

A cet effet, l'invention a pour objet un procédé de régulation d'une unité de traitement d'au moins un gaz de charge, dans lequel l'unité de traitement comporte N unités d'adsorption, N étant supérieur ou égal à 1, fonctionnant suivant un cycle paramétré dans lequel on utilise une unité de commande de l'unité de traitement adaptée pour modifier au moins un paramètre du cycle en fonction d'au moins un paramètre du gaz de charge ou du gaz produit, notamment en fonction de valeurs représentatives du débit et/ou de la composition du gaz de charge en entrée de l'unité de traitement et/ou du gaz produit en sortie de ladite unité de traitement, et dans lequel, à chaque évolution prévisionnelle de la composition du gaz de charge à traiter, on envoie à l'unité de commande un signal préétabli représentatif de ladite évolution, et l'unité de commande traite ledit signal pour déterminer les paramètres d'un cycle exceptionnel de fonctionnement de l'unité de traitement adapté à ladite évolution prévisionnelle.

Suivant d'autres caractéristiques de ce procédé, prises isolément ou selon toutes les combinaisons techniquement possibles :

- le signal préétabli est représentatif de l'intensité de l'évolution prévisionnelle de la composition du gaz de charge ;
- on envoie en continu à l'unité de commande un signal de référence, et à chaque évolution prévisionnelle, on modifie ledit signal de référence pour former le signal préétabli ;
- on détermine le signal préétabli selon le fonctionnement d'au moins une unité disposée en amont de l'unité de traitement et formant, au moins en partie, le gaz de charge à traiter ;
- la durée du cycle exceptionnel est prédéterminée ;
- la durée du cycle exceptionnel est indiquée à l'unité de commande par transmission d'un signal de fin, ledit signal de fin étant préétabli en fonction de l'évolution prévisionnelle de la composition du gaz de charge ;
- durant chaque cycle paramétré de fonctionnement de l'unité de traitement se succèdent une phase d'adsorption sensiblement à une haute pression du cycle et une phase de régénération comprenant une étape de dépressurisation jusqu'à une basse pression du cycle et une étape de repressurisation sensiblement jusqu'à ladite haute pression du cycle, et les paramètres du cycle exceptionnel déterminés par l'unité de commande sont choisis parmi la durée du temps de phase et la durée d'au moins une des étapes de la phase de régénération ;
- un signal représentatif du débit et/ou de la densité du flux de gaz de charge est envoyé régulièrement à l'unité de commande, et l'unité de commande détermine les paramètres du cycle exceptionnel de fonctionnement de l'unité de traitement, puis ajuste ces paramètres à partir du signal représentatif du débit et/ou de la densité dudit flux de gaz de charge ;

- un signal représentatif du débit et/ou de la composition du flux gazeux produit par l'unité de traitement est envoyé régulièrement à l'unité de commande, et l'unité de commande détermine les paramètres du cycle exceptionnel de fonctionnement de l'unité de traitement, puis ajuste ces paramètres à partir du signal représentatif du débit et/ou de la composition dudit flux gazeux produit ; et
- l'unité de traitement est une unité de production d'hydrogène sensiblement pur.

L'invention sera mieux comprise à la lecture de la description qui va suivre, donnée uniquement à titre d'exemple et faite en se référant aux dessins sur lesquels :

- la figure 1, mentionnée plus haut, est une vue schématique d'une unité de traitement PSA associée à une unité de commande et régulée selon des techniques de l'art antérieur ;
- la figure 2 est une vue schématique d'une installation de production combinée d'hydrogène et de monoxyde de carbone, comportant une unité PSA régulée selon l'invention ;
- la figure 3 est un diagramme de fonctionnement de l'unité PSA de la figure 2 ; et
- la figure 4 est une vue analogue à celle de la figure 1, illustrant un exemple de mise en oeuvre du procédé selon l'invention.

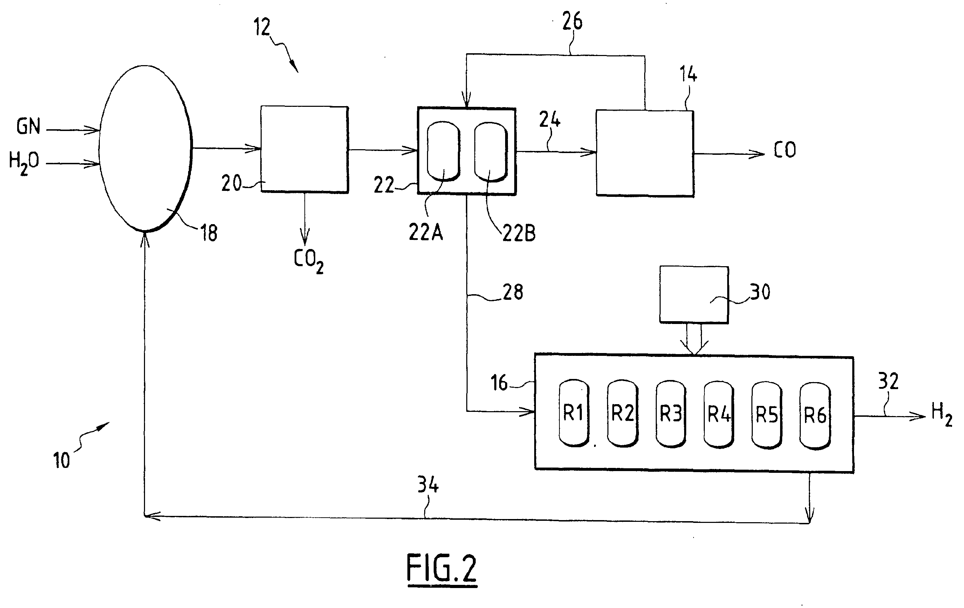

Sur la figure 2 est représentée une installation 10 de production combinée d'hydrogène et de monoxyde de carbone à partir d'un reformage à la vapeur d'un gaz de charge constitué de gaz naturel GN. L'installation comporte une ligne 12 de traitement du gaz naturel, en aval de laquelle sont raccordées à la fois une unité cryogénique 14 de production de monoxyde de carbone (CO) et une unité 16 de production d'hydrogène ($H_2$), détaillées plus loin.

La ligne de traitement 12 comporte, d'amont en aval :

- un réacteur 18 dans lequel le gaz naturel est désulfuré, les hydrocarbures lourds sont décomposés en méthane et en dioxyde de carbone, et le méthane est converti en gaz de synthèse riche en hydrogène et contenant du monoxyde de carbone et du dioxyde de carbone ;
- une unité 20 de lavage aux aminés dont le flux résiduel riche en dioxyde de carbone est soutiré ; et
- une unité 22 d'épuration permettant d'arrêter la quasi-totalité de l'eau et du dioxyde de carbone.

Une première sortie 24 de l'unité d'épuration 22 est raccordée à l'unité cryogénique 14, qui comporte une ligne 26 de retour à la ligne d'épuration. Une deuxième sortie 28 de l'unité d'épuration 22 est raccordée à l'unité PSA 16 de façon à véhiculer le gaz de charge de cette unité.

L'unité d'épuration 22 comporte deux bouteilles d'adsorbants 22A, 22B mises en ligne de façon alternée pour assurer l'épuration par adsorption du mélange gazeux en sortie de l'unité de lavage aux aminés 20.

L'unité 22 comporte également des vannes, des conduites de raccordement et des moyens de commande non représentés sur la figure 2, adaptés pour à la fois soumettre l'une des deux bouteilles 22A, 22B en adsorption au flux en sortie de l'unité 20, et pour balayer l'autre des deux bouteilles, c'est-à-dire celle en régénération, par le flux sortant de la ligne 26.

L'unité 16 comporte quant à elle six adsorbeurs R1 à R6, comportant chacun des matériaux adsorbants adaptés pour fixer par adsorption des impuretés, telles que l'eau, le dioxyde de carbone, le méthane, le monoxyde de carbone, contenues dans le gaz de charge de la ligne 28. Différents types de matériaux adsorbants sont envisageables, tels que des charbons activés, des gels de silice et/ou des tamis moléculaires.

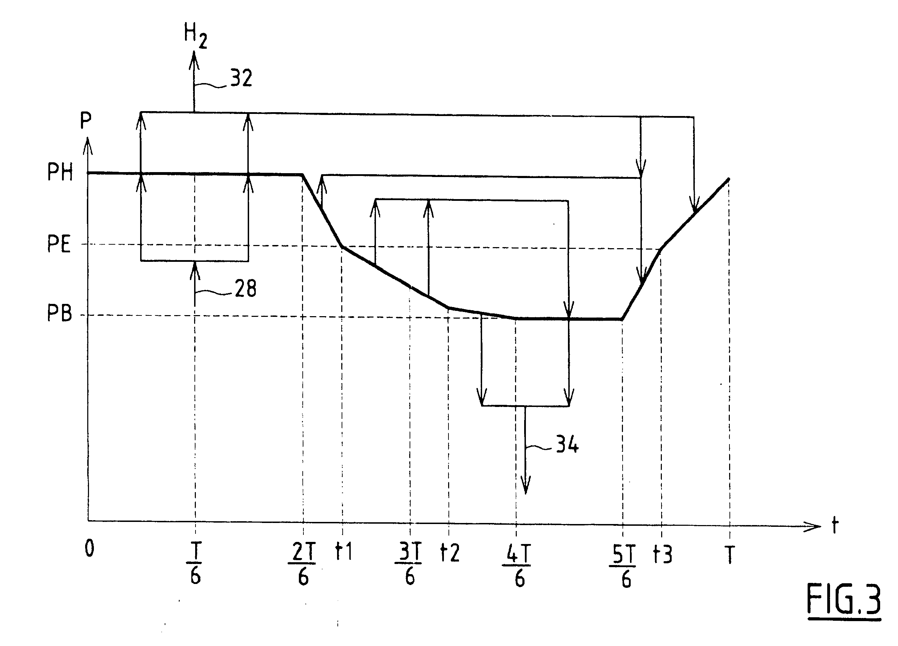

L'unité 16 est de type PSA. Elle comporte à cet effet des conduites et des vannes non représentées, ainsi qu'une unité de commande 30 détaillée plus loin, adaptées pour faire suivre à chaque adsorbeur R1 à R6 un cycle de période T, constitué de six temps de phase nominaux de même durée, et dont un exemple est représenté sur la figure 3. En considérant que le cycle représenté s'applique depuis l'instant t = 0 à t = T à l'adsorbeur R6, le fonctionnement de l'adsorbeur R5 s'en déduit par décalage dans le temps de T/6, celui de l'adsorbeur R4 par décalage dans le temps de 2T/6, ainsi de suite jusqu'à celui de l'adsorbeur R1 obtenu par décalage dans le temps de 5T/6.

Par dualité temps de phase / adsorbeur, cela revient à considérer que, sur la figure 3, l'adsorbeur R6 suit le premier temps de phase représenté entre les instants t = 0 et t = T/6, l'adsorbeur R5 suit le deuxième temps de phase représenté entre les instants t = T/6 et t = 2T/6, et ainsi de suite jusqu'à l'adsorbeur R1 qui suit le sixième temps de phase représenté entre les instants t = 5 T/6 et t = T.

Sur la figure 3, où les temps t sont portés en abscisses et les pressions absolues P en ordonnées, les traits orientés par les flèches indiquent les mouvements et destinations des courants gazeux, et, en outre, le sens de circulation dans les adsorbeurs R1 à R6 : lorsqu'une flèche est dans le sens des ordonnées croissantes (vers le haut du diagramme), le courant est dit à co-courant dans l'adsorbeur ; si la flèche dirigée vers le haut est située au-dessous du trait indiquant la pression dans l'adsorbeur, le courant pénètre dans l'adsorbeur par l'extrémité d'entrée de cet adsorbeur ; si la flèche, dirigée vers le haut, est située au-dessus du trait indiquant la pression, le courant sort de l'adsorbeur par l'extrémité de sortie de l'adsorbeur, les extrémités d'entrée et de sortie étant respectivement celles du gaz à traiter et du gaz soutiré en production. Lorsqu'une flèche est dans le sens des ordonnées décroissantes (vers le bas du diagramme) le courant est dit à contre-courant dans l'adsorbeur ; si la flèche dirigée vers le bas est située au-dessous du trait indiquant la pression de l'adsorbeur, le courant sort de l'adsorbeur par l'extrémité d'entrée de cet adsorbeur ; si la flèche dirigée vers le bas est située au-dessus du trait indiquant la pression, le courant pénètre dans l'adsorbeur par l'extrémité de sortie de cet adsorbeur, les extrémités d'entrée et de sortie étant toujours celles du gaz à traiter et du gaz soutiré en production. L'extrémité d'entrée des adsorbeurs est leur extrémité inférieure.

Ainsi, par exemple pour l'adsorbeur R6, le cycle comporte une phase d'adsorption de $\underline{t}$ = 0 à $\underline{t}$ = 2T/6 et une phase de régénération de $\underline{t}$ = 2T/6 à $\underline{t}$ = T.

Plus précisément, durant la phase d'adsorption, le gaz de charge impur véhiculé par la ligne 28 arrive à l'entrée de l'adsorbeur à une haute pression d'adsorption, noté PH sur le cycle de la figure 3, de 20 bars environ. Un flux d'hydrogène sensiblement pur est alors soutiré en tête, sous la même pression, et alimente en partie une ligne 32 de production d'hydrogène, le reste étant envoyé à un autre adsorbeur en cours d'étape de repressurisation décrite plus loin.

La phase de régénération comporte, de $\underline{t}$ = 2T/6 à $\underline{t}$ = 4T/6 :

- de $\underline{t}$ = 2T/6 à $\underline{t}$ = t1, t1 étant inférieur à 3T/6, une première étape de dépressurisation à co-courant durant laquelle, la sortie de l'adsorbeur R6 est reliée à celle d'un autre adsorbeur en début d'étape de repressurisation décrite plus loin, jusqu'à équilibre des pressions des deux adsorbeurs à une pression d'équilibre, notée PE ;
- de t1 à $\underline{t}$ = t2, t2 étant inférieur à 4T/6, une seconde étape de dépressurisation à co-courant durant laquelle, le flux sortant à co-courant de l'adsorbeur R6 est décomprimé et envoyé à la sortie d'adsorbeurs en étape d'élution décrite plus loin ; et
- de t2 à $\underline{t}$ = 4T/6, une étape de dépressurisation à contre-courant durant laquelle le flux sortant de l'adsorbeur R6 est envoyé à une ligne de résiduaire 34, raccordée en sortie au réacteur 18 ; cette étape se poursuit jusqu'à la basse pression du cycle, notée PB et valant environ 1,6 bar.

La phase de régénération comporte ensuite, de $\underline{t}$ = 4T/6 à $\underline{t}$ = 5T/6, une étape d'élution durant laquelle le matériau adsorbant est balayé à contre-courant par un gaz d'élution afin de désorber la quasi-totalité des impuretés précédemment adsorbées.

Le flux en sortie de l'adsorbeur forme un gaz résiduaire sous la basse pression PB, envoyé dans la ligne 34.

La phase de régénération comporte enfin :

- de $\underline{t}$ = 5T/6 à $\underline{t}$ = t3, une première étape de repressurisation à contre-courant, durant laquelle l'adsorbeur reçoit à la fois une partie des flux issus des adsorbeurs en phase d'adsorption et le flux issu de l'adsorbeur en première étape de dépressurisation à co-courant ; et
- de $\underline{t}$ = t3 à $\underline{t}$ = T, une seconde étape de repressurisation à contre-courant durant laquelle l'adsorbeur reçoit uniquement une partie des flux issus des adsorbeurs en phase d'adsorption jusqu'à la pression haute PH.

Sur la figure 4 est représentée plus en détail l'architecture de l'unité de commande 30. Celle-ci comporte un séquenceur de commande 36 adapté pour piloter l'unité PSA 16, c'est-à-dire pour envoyer les différents signaux de commande des vannes de l'unité PSA afin de faire suivre aux six adsorbeurs R1 à R6 le cycle de fonctionnement décrit ci-dessus. L'unité de commande 30 comporte en outre un micro-processeur 38 capable de modifier les instructions de commande du séquenceur 36, c'est-à-dire capable de réguler, en réponse à des signaux détaillés ci-après, les paramètres du cycle imposés aux adsorbeurs par le séquenceur.

A cet effet, la ligne d'alimentation 28 est par exemple munie d'un débitmètre 40, relié, via par exemple un conducteur de signaux 42, au régulateur 38. De plus, la ligne de production 32 est par exemple pourvue d'un appareil 44 adapté pour analyser en continu la teneur en monoxyde de carbone du flux d'hydrogène sensiblement pur soutiré de l'unité 16. L'appareil d'analyse 44 est relié au régulateur 38, via par exemple un conducteur de signaux 46. Enfin, selon un aspect de l'invention, l'unité de commande est reliée à une source extérieure de signaux 50, dont la fonction sera détaillée lors de la description du fonctionnement de l'installation 10.

Le fonctionnement global de l'installation 10 est le suivant. En régime établi, c'est-à-dire en dehors de périodes de transition, de démarrage ou d'arrêt de l'installation, le réacteur 18 est alimenté en gaz naturel et en eau, et produit un mélange riche en hydrogène, en monoxyde de carbone et en dioxyde de carbone, et contenant en plus du méthane, de l'azote, de l'eau, ainsi que des traces d'hydrocarbures lourds.

Par lavage aux aminés dans l'unité 20 et par épuration dans l'unité 22, le flux véhiculé par la ligne 24 présente à la fois de fortes teneurs en hydrogène et en monoxyde de carbone, par exemple égales à respectivement 73,5 et 21,6 % molaire, de faibles teneurs en azote et en méthane, par exemple égal à 1,1 et 3,8 % molaire.

L'unité cryogénique 14 produit alors un flux de monoxyde de carbone sensiblement pur, en évacuant dans la ligne 26 un mélange gazeux riche en hydrogène utilisé pour la régénération de successivement l'une et l'autre des bouteilles 22A et 22B de l'unité d'épuration 22.

A titre d'exemple, le mélange véhiculé par la ligne 26 contient ainsi 97,4 % molaire d'hydrogène, 0,3 % d'azote, 0,3 % de monoxyde de carbone et 2 % de méthane. Le flux en sortie de la bouteille 22A, 22B en régénération est envoyé dans la ligne 28, qui véhicule en continu ce flux jusqu'à l'unité PSA 16. Le fonctionnement de cette unité PSA est imposé par le séquenceur 36 de l'unité de commande 30, en faisant par exemple suivre aux adsorbeurs R1 à R6 le cycle de la figure 3.

Ce cycle est susceptible d'être régulé en permanence par le régulateur 38, en fonction de signaux qu'il reçoit.

Ainsi, de manière connue comme évoquée plus avant, les mesures du débitmètre amont 40 sont transmises en continu au régulateur 38 de sorte que, si le débit de flux de charge en 28 augmente par rapport au débit nominal pour lequel le cycle de la figure 3 a été conçu, le régulateur calcule un nouveau temps de phase, plus court que le temps de phase nominal du cycle de la figure 3. C'est ce qui est appelé dans la technique une régulation de capacité. Pour, par exemple, un temps de phase nominal noté $T_\varphi^N$, le nouveau temps de phase $T_\varphi$ est :

$$T_\varphi = T_\varphi^N \times \frac{\text{débit nominal}}{\text{débit mesuré par le débitmètre } 40}.$$

Le régulateur 38 élabore alors un nouveau cycle, sensiblement plus court que celui de la figure 3, et détermine un moment compatible pour transmettre ce nouveau cycle au séquenceur, qui l'imposera alors à l'unité PSA. On comprend que la mise en oeuvre par le séquenceur 36 ne peut pas toujours être instantanée, et ce pour tous les adsorbeurs. Il convient en effet d'attendre que chaque adsorbeur soit dans une configuration de passage ou de commutation, par exemple en fin de repressurisation ou de dépressurisation.

De la même façon, et également de manière connue en soi comme évoqué dans le préambule, l'appareil 44 transmet en continu au régulateur 38 la teneur en monoxyde de carbone du flux d'hydrogène produit. Si cette teneur se rapproche d'une valeur maximale déterminée que connaît le régulateur 38, ce dernier détermine un nouveau cycle comme expliqué ci-dessus, et le transmet au séquenceur 36. C'est ce qui est couramment appelé une régulation sur le contrôle de pureté. En reprenant les notations précédentes, le nouveau temps de phase $T_\varphi$ est :

$$T_\varphi = T_\varphi^N \times \frac{\text{débit nominal}}{\text{débit mesuré par le débitmètre } 40} \times C_A,$$

où $C_A$ est un facteur correctif calculé par le régulateur 38. Si la teneur en monoxyde de carbone est supérieure à celle requise, le temps de phase est rallongé ($C_A$ strictement supérieur à 1), ce qui permet de diminuer les pertes horaires en hydrogène, et donc d'augmenter le rendement d'extraction en hydrogène.

Les régulations de capacité et sur le contrôle de pureté décrites ci-dessus permettent ainsi d'optimiser en permanence le fonctionnement de l'unité PSA 16 du point de vue du rendement d'extraction en hydrogène (quantité d'hydrogène produite par l'unité / quantité d'hydrogène introduite dans l'unité).

Selon un aspect de l'invention, une autre régulation est permise par la source de signaux 50. Cette dernière est adaptée pour fournir au régulateur 38, à un instant prédéterminé, des signaux préétablis indépendants du flux de charge véhiculé audit instant par la ligne 28 et du flux de production véhiculé audit instant par la ligne 32.

Sur la base de ces signaux et indépendamment de ceux transmis par le débitmètre 40 et l'appareil 44, le régulateur 38 détermine un nouveau cycle et le transmet au séquenceur 36. Le recours à cette « régulation a priori » est destiné à pallier les limites de régulations connues, détaillées ci-dessus.

En reprenant le fonctionnement de l'unité 10 décrite ci-dessus, et en s'intéressant aux évolutions du flux de gaz de charge véhiculé par la ligne 28, on note que, durant l'application du gaz de régénération véhiculé par la ligne 26, le matériau adsorbant de la bouteille d'épuration 22A ou 22B qui débute sa régénération est saturé en eau, en dioxyde de carbone et en monoxyde de carbone. Les premiers instants de régénération de l'adsorbant d'une bouteille de l'unité d'épuration 22 s'accompagnent d'une forte désorption de monoxyde de carbone, la teneur en monoxyde de carbone du flux évacué dans la ligne 28 pouvant atteindre plus de dix fois celle du flux de régénération de la ligne 26. Appliquée telle quelle à l'unité PSA 16, cette bouffée brusque et intense de monoxyde de carbone entraînerait des perturbations de fonctionnement importantes, qui conduiraient à une perte de rendement d'hydrogène et/ou à une pollution du flux de production de l'unité 16. La régulation de capacité est inopérante car la modification du gaz de charge concerne essentiellement sa composition et non son débit. La dégradation de la pureté du flux produit entraînerait une activation de la régulation du contrôle sur la pureté, mais trop tardive pour éviter la pollution des adsorbeurs de l'unité 16, la détection de la pollution dans la ligne 32 n'intervenant que plusieurs temps de phase après le début du changement brusque de composition du flux de charge.

Dans la mesure où l'arrivée de la bouffée de monoxyde de carbone est prévisible, et de teneur et durée connues par expérience, par calcul voire par une analyse lors du démarrage de l'unité PSA, la source 50 signale, avant que cette bouffée ne survienne, au régulateur 38 les évolutions correspondantes du gaz de charge. Le régulateur peut alors calculer de nouveaux paramètres de cycle, notamment la durée du temps de phase, la durée des différentes étapes du cycle décrites plus haut, etc, et anticiper des modes de fonctionnement atypiques temporaires.

Le nouveau cycle obtenu est ensuite envoyé, au moment prévu pour l'arrivée de la bouffée de monoxyde de carbone, au séquenceur 36.

A titre d'exemple, en réponse au signal de la source 50, le régulateur 38 détermine un temps de phase exceptionnel $T_\varphi{}^{EXC}$ sur la base duquel l'unité 16 fonctionne au moins pendant la durée au bout de laquelle le matériau absorbant de l'adsorbeur 22A, 22B en cours de régénération est sensiblement déchargé de la majeure partie du monoxyde de carbone. La durée de ce cycle exceptionnel est soit prédéterminée, et l'information correspondante est alors contenue dans l'unité de commande 30, soit indiquée au régulateur 38 par un nouveau signal provenant de la source 50.

Ainsi, la régulation apportée suivant le procédé selon l'invention est mise en oeuvre au moment voulu et pendant la durée nécessaire.

Contrairement à la régulation décrite plus haut en regard de la figure 1, le signal transmis ne donne pas la composition du gaz de charge mais indique seulement le début d'un brusque changement de composition, et éventuellement sa fin.

Elle permet de parfaitement appréhender de brusques modifications des paramètres d'état du gaz de charge de l'unité PSA, notamment lors de la remise en ligne en amont d'une bouteille d'adsorbant régénéré, lors d'un bipasse d'un équipement ou d'une unité amont pour maintenance ou entretien, lors de l'addition d'un gaz de charge secondaire au gaz de charge principal pour augmenter périodiquement la production, lors du changement du gaz de charge, ou lors de l'arrêt d'une unité amont d'épuration en un ou plusieurs constituants telle qu'une unité de lavage. En effet toutes ces modifications correspondent à des fonctionnements périodiques prévus à l'avance pour lesquels la composition exceptionnelle du gaz de charge du PSA qui en résulte est déterminée par expérience, par calcul ou par une analyse initiale.

Pendant que l'unité PSA 16 fonctionne suivant un cycle exceptionnel, la régulation de capacité (liée au débit du flux de charge) peut être laissée active. De même, la régulation du contrôle sur la pureté peut être laissée active à la condition que les corrections introduites par ces régulations (par exemple par le facteur correctif $C_A$) soient du second ordre par rapport à la correction a priori selon l'invention. Cela revient à dire que le régulateur 38 détermine d'abord les paramètres du cycle exceptionnel uniquement en fonction des signaux transmis par la source 50, puis ajuste ces paramètres à partir des informations transmises par le débitmètre 40 et/ou l'appareil d'analyse 44. Par exemple, le temps de phase du cycle

$$T_\varphi = T_\varphi{}^{EXC} \times \frac{\text{débit nominal de la ligne 28}}{\text{débit mesuré par le débitmètre 40}} \times C_A.$$

exceptionnel peut être obtenu par la relation

En variante, la source de signaux 50 envoie en continu un signal de référence à l'unité de commande 30, ce signal de référence étant perturbé à chaque évolution prévisionnelle de la composition du gaz de charge. Cette variante permet à l'unité 30 de s'assurer de sa connexion permanente à l'unité 50.

En variante également, dans le cas où la nature de la perturbation est connue mais où son intensité varie d'une fois à l'autre, il est possible de remplacer le simple signal de début par une information donnant le niveau de la modification à venir qui permet ainsi au système de commande 30 d'établir le cycle le plus adapté.

En reprenant l'exemple donné plus haut, il arrive que seule une fraction du gaz de régénération 26 soit utilisé pour régénérer l'adsorbeur 22A ou 22B. Le gaz de charge du PSA est donc constitué par un mélange de gaz contenant plus ou moins de monoxyde de carbone selon le pourcentage utilisé en régénération. Dans ce cas, le signal envoyé est représentatif par exemple de ce pourcentage.

Si la brusque variation provient de l'adjonction périodique d'une deuxième source de gaz de charge, le signal est par exemple représentatif du débit de gaz d'appoint, ou bien du degré d'ouverture de la vanne d'introduction.

Quoique l'invention ait été décrite en relation avec des modes de réalisation particuliers, elle ne s'en trouve pas limitée mais est susceptible de modifications et de variantes qui apparaîtront à l'homme du métier dans le cadre des revendications ci-après.

## Revendications

**1.** Procédé de régulation d'une unité de traitement produisant un gaz produit, par adsorption à modulation de pression d'au moins un gaz de charge, dans lequel l'unité de traitement (16) comporte N unités d'adsorption (R1 à R6), N étant supérieur ou égal à 1, fonctionnant suivant un cycle paramétré dans lequel on utilise une unité (30) de commande de l'unité de traitement (16), adaptée pour modifier au moins un paramètre du cycle en fonction d'au moins un paramètre du gaz de charge ou du gaz produit et où, à chaque évolution prévisionnelle de la composition du gaz de charge à traiter, on envoie à l'unité de commande (30) un signal préétabli représentatif de ladite évolution, l'unité de commande (30) traitant ledit signal pour déterminer les paramètres d'un cycle exceptionnel de fonctionnement de l'unité de traitement (16) adapté à ladite évolution prévisionnelle.

2. Procédé suivant la revendication 1, **caractérisé en ce que** ledit signal préétabli est représentatif de l'intensité de l'évolution prévisionnelle de la composition du gaz de charge.

3. Procédé suivant la revendication 1 ou 2, **caractérisé en ce qu'**on envoie en continu à l'unité de commande (30) un signal de référence, et **en ce qu'**à chaque évolution prévisionnelle, on modifie ledit signal de référence pour former le signal préétabli.

4. Procédé suivant l'une des revendications précédentes, **caractérisé en ce qu'**on détermine le signal préétabli selon le fonctionnement d'au moins une unité disposée en amont de l'unité de traitement (16) et produisant, au moins en partie, le gaz de charge à traiter.

5. Procédé suivant l'une des revendications précédentes, **caractérisé en ce que** la durée du cycle exceptionnel est prédéterminée.

6. Procédé suivant l'une des revendications 1 à 4, **caractérisé en ce que** la durée du cycle exceptionnel est indiquée à l'unité de commande (30) par transmission d'un signal de fin, ledit signal de fin étant préétabli en fonction de l'évolution prévisionnelle de la composition du gaz de charge.

7. Procédé suivant l'une des revendications précédentes, **caractérisé en ce que** durant chaque cycle paramétré de fonctionnement de l'unité de traitement (16) se succèdent une phase d'adsorption sensiblement à une haute pression du cycle (PH) et une phase de régénération comprenant une étape de dépressurisation jusqu'à une basse pression du cycle (PB) et une étape de repressurisation sensiblement jusqu'à ladite haute pression du cycle, et **en ce que** les paramètres du cycle exceptionnel déterminés par l'unité de commande (30) sont choisis parmi la durée du temps de phase ($T\varphi^{exc}$) et la durée d'au moins une des étapes de la phase de régénération.

8. Procédé suivant l'une des revendications précédentes, **caractérisé en ce qu'**un signal représentatif du débit et/ou de la densité du flux de gaz de charge est envoyé régulièrement à l'unité de commande (30), et **en ce que** l'unité de commande (30) détermine les paramètres du cycle exceptionnel de fonctionnement de l'unité de traitement (16), puis ajuste ces paramètres à partir du signal représentatif du débit et/ou de la densité dudit flux de gaz de charge.

9. Procédé suivant l'une des revendications précédentes, **caractérisé en ce qu'**un signal représentatif du débit et/ou de la composition du flux gazeux produit par l'unité de traitement (16) est envoyé régulièrement à l'unité de commande (30), et **en ce que** l'unité de commande (30) détermine les paramètres du cycle exceptionnel de fonctionnement de l'unité de traitement (16), puis ajuste ces paramètres à partir du signal représentatif du débit et/ou de la composition dudit flux gazeux produit.

10. Procédé suivant l'une des revendications précédentes, **caractérisé en ce que** l'unité de traitement (16) est une unité de production d'hydrogène sensiblement pur.

**Claims**

1. Method for controlling a treatment unit producing a product gas, by pressure swing adsorption of at least one feed gas, in which the treatment unit (16) comprises N adsorption units (R1 to R6), N being greater than or equal to 1, operating on a parametrized cycle in which use is made of a control unit (30) for controlling the treatment unit (16), designed to modify at least one parameter of the cycle, as a function of at least one parameter of the feed gas or of the product gas and where, each time there is a predicted change in the composition of the feed gas that is to be treated, the control unit (30) is sent a pre-established signal representing the said change, the control unit (30) processing the said signal to determine the parameters of an exceptional operating cycle of the treatment unit (16) which cycle is suited to the said predicted change.

2. Method according to Claim 1, **characterized in that** the said pre-established signal is representative of the intensity of the predicted change in the composition of the feed gas.

3. Method according to Claim 1 or 2, **characterized in that** a reference signal is constantly sent to the control unit (30), and **in that** each time there is a predicted change, the said reference signal is modified to form the pre-established signal.

4. Method according to one of the preceding claims, **characterized in that** the pre-established signal is determined on the basis of the operation of at least one unit arranged upstream of the treatment unit (16) and at least partially producing the feed gas that is to be treated.

5. Method according to one of the preceding claims, **characterized in that** the duration of the exceptional cycle is predetermined.

6. Method according to one of Claims 1 to 4, **characterized in that** the duration of the exceptional cycle is indicated to the control unit (30) by the transmission of an end signal, the said end signal being pre-established on the basis of the predicted change in the composition of the feed gas.

7. Method according to one of the preceding claims, **characterized in that**, during each parametrized operating cycle of the treatment unit (16) there are, in succession, a phase of adsorption, at practically a high pressure of the cycle (PH) and a phase of regeneration comprising a step of depressurization down to a low pressure of the cycle (PB) and a step of repressurization practically up to the said high pressure of the cycle, and **in that** the parameters of the exceptional cycle that are determined by the control unit (30) are chosen from the duration of the phase time ($T\varphi^{exc}$) and the duration of at least one of the steps of the regeneration phase.

8. Method according to one of the preceding claims, **characterized in that** a signal representing the flow rate and/or the density of the feed gas stream is sent regularly to the control unit (30), and **in that** the control unit (30) determines the parameters of the exceptional operating cycle of the treatment unit (16), then adjusts these parameters on the basis of the signal representing the flow rate and/or the density of the said feed gas stream.

9. Method according to one of the preceding claims, **characterized in that** a signal representing the flow rate and/or the composition of the gaseous stream produced by the treatment unit (16) is sent regularly to the control unit (30), and **in that** the control unit (30) determines the parameters of the exceptional operating cycle of the treatment unit (16), then adjusts these parameters on the basis of the signal representing the flow rate and/or the composition of the said gaseous stream produced.

10. Method according to one of the preceding claims, **characterized in that** the treatment unit (16) is a unit for the production of practically pure hydrogen.

**Patentansprüche**

1. Verfahren zur Regelung einer Behandlungsvorrichtung, die ein Gasprodukt erzeugt, durch Druckwechseladsorption wenigstens eines Feedgases, wobei die Behandlungsvorrichtung (16) N Adsorptionsvorrichtungen (R1 bis R6) aufweist, wobei N größer oder gleich 1 ist, die nach einem parametrisierten Zyklus arbeiten, bei welchem eine Vorrichtung (30) zur Steuerung der Behandlungsvorrichtung (16) verwendet wird, die in der Lage ist, mindestens einen Parameter des Zyklus in Abhängigkeit von mindestens einem Parameter des Feedgases oder des Gasproduktes zu ändern, und wobei bei jeder voraussichtlichen Änderung der Zusammensetzung des zu behandelnden Feedgases an die Steuerungsvorrichtung (30) ein im Voraus festgelegtes Signal gesendet wird, das für diese Änderung repräsentativ ist, wobei die Steuerungsvorrichtung (30) dieses Signal verarbeitet, um die Parameter eines außerordentlichen Funktionszyklus der Behandlungsvorrichtung (16) zu bestimmen, der an diese voraussichtliche Änderung angepasst ist.

2. Verfahren nach Anspruch 1, **dadurch gekennzeichnet, dass** das im Voraus festgelegte Signal für die Größe der voraussichtlichen Änderung der Zusammensetzung des Feedgases repräsentativ ist.

3. Verfahren nach Anspruch 1 oder 2, **dadurch gekennzeichnet, dass** an die Steuerungsvorrichtung (30) kontinuierlich ein Referenzsignal gesendet wird, und **dadurch**, dass bei jeder voraussichtlichen Änderung dieses Referenzsignal geändert wird, um das im Voraus festgelegte Signal zu bilden.

4. Verfahren nach einem der vorhergehenden Ansprüche, **dadurch gekennzeichnet, dass** das im Voraus festgelegte Signal entsprechend der Funktionsweise mindestens einer Vorrichtung bestimmt wird, die stromaufwärts der Behandlungsvorrichtung (16) angeordnet ist und mindestens teilweise das zu behandelnde Feedgas erzeugt.

5. Verfahren nach einem der vorhergehenden Ansprüche, **dadurch gekennzeichnet, dass** die Dauer des außerordentlichen Zyklus vorgegeben ist.

6. Verfahren nach einem der Ansprüche 1 bis 4, **dadurch gekennzeichnet, dass** die Dauer des außerordentlichen Zyklus der Steuerungsvorrichtung (30) durch Übertragung eines Endsignals angezeigt wird, wobei das Endsignal in Abhängigkeit von der voraussichtlichen Änderung der Zusammensetzung des Feedgases im Voraus festgelegt wird.

7. Verfahren nach einem der vorhergehenden Ansprüche, **dadurch gekennzeichnet, dass** während jedes parametrisierten Zyklus des Betriebs der Behandlungsvorrichtung (16) eine Adsorptionsphase im Wesentlichen bei einem hohen Druck des Zyklus (PH) und eine Regenerationsphase, die eine Etappe des Druckabfalls bis zu einem niedrigen Druck des Zyklus (PB) und eine Etappe des erneuten Druckanstiegs im Wesentlichen bis zu dem hohen Druck des Zyklus umfasst, aufeinander folgen, und **dadurch**, dass die Parameter des außerordentlichen Zyklus, die von der Steuerungsvorrichtung (30) bestimmt werden, aus der Dauer der Phasenzeit ($T\varphi^{exc}$) und der Dauer mindestens einer der Etappen der Regenerationsphase ausgewählt werden.

8. Verfahren nach einem der vorhergehenden Ansprüche, **dadurch gekennzeichnet, dass** ein Signal, das für den Durchsatz und/oder die Dichte des Stroms des Feedgases repräsentativ ist, regelmäßig zu der Steuerungsvorrichtung (30) gesendet wird, und **dadurch**, dass die Steuerungsvorrichtung (30) die Parameter des außerordentlichen Funktionszyklus der Behandlungsvorrichtung (16) bestimmt und anschließend diese Parameter ausgehend von dem Signal anpasst, das für den Durchsatz und/oder die Dichte des Stroms des Feedgases repräsentativ ist.

9. Verfahren nach einem der vorhergehenden Ansprüche, **dadurch gekennzeichnet, dass** ein Signal, das für den Durchsatz und/oder die Zusammensetzung des von der Behandlungsvorrichtung (16) erzeugten Gasstromes repräsentativ ist, regelmäßig zu der Steuerungsvorrichtung (30) gesendet wird, und **dadurch**, dass die Steuerungsvorrichtung (30) die Parameter des außerordentlichen Funktionszyklus der Behandlungsvorrichtung (16) bestimmt und anschließend diese Parameter ausgehend von dem Signal anpasst, das für den Durchsatz und/oder die Zusammensetzung des erzeugten Gasstromes repräsentativ ist.

10. Verfahren nach einem der vorhergehenden Ansprüche, **dadurch gekennzeichnet, dass** die Behandlungsvorrichtung (16) eine Vorrichtung zur Produktion von im Wesentlichen reinem Wasserstoff ist.

## FIG.1 (Art antérieur)

## FIG.4

FIG.2

FIG.3